Europäisches Patentamt

**European Patent Office**

Office européen des brevets

(11) Numéro de publication : **0 113 303**
**B1**

(12)

# FASCICULE DE BREVET EUROPÉEN

(45) Date de publication du fascicule du brevet :
07.05.86

(21) Numéro de dépôt : 83430044.4

(22) Date de dépôt : 28.12.83

(51) Int. Cl.⁴ : **B 29 C 51/44, B 29 C 33/44**

(54) **Dispositif fonctionnel de formage pour film en résine synthétique.**

(30) Priorité : 30.12.82 FR 8222207

(43) Date de publication de la demande :
11.07.84 Bulletin 84/28

(45) Mention de la délivrance du brevet :
07.05.86 Bulletin 86/19

(84) Etats contractants désignés :
**BE CH DE GB IT LI NL**

(56) Documents cités :
**FR-A- 1 096 715**
**FR-A- 2 076 587**
**US-A- 3 433 862**

(73) Titulaire : **Ferrand, Claude**
**263 Chemin de Bellet**
**F-06200 Nice (FR)**

(72) Inventeur : **Ferrand, Claude**
**263 Chemin de Bellet**
**F-06200 Nice (FR)** .

(74) Mandataire : **Roman, Alphonse**
**35 Rue Paradis**
**F-13001 Marseille (FR)**

Jouve, 18, rue St-Denis, 75001 Paris, France

## Description

L'objet de l'invention concerne un dispositif fonctionnel de mandrin de formage pour films en résine synthétique, selon le préambule de la revendication 1. Un tel dispositif est connu du document US-A-3433862.

Il est destiné à assurer la régularité de formage à chaud et supprimer lors du retrait de l'empreinte les plissures ou déformations des films utilisés pour les conditionnements à parois lamellaires ou pelliculaires et plus particulièrement avec surface perforée.

Dans les dispositifs connus on utilisait pour éviter l'adhérence de la matière plastique formée contre le piston ou mandrin de formage, soit une pression pneumatique, soit la production d'un vide. En ce qui concerne le film plein, les plissures étaient qualifiées de « chaussettes » pour matérialiser la déformation de ce vêtement lorsqu'on le retire du pied. Par contre, si le film était perforé ou ajouré, on ne pouvait exécuter le formage. En tout état de cause, les outillages pour éviter cette adhérence sous le piston formeur étaient complexes et coûteux mais le plus souvent inefficaces.

Le dispositif suivant l'invention supprime ces inconvénients et permet d'éviter l'emploi des systèmes pneumatiques en assurant rapidement le décollage de la surface de formage ayant subi la pression du mandrin et permettant d'obtenir une planéité totale du fond de la capacité.

Il est caractérisé par la combinaison d'un piston espaceur et détacheur placé à la base du mandrin dans une cavité, d'un ressort placé dans ladite cavité et agissant sur ledit piston espaceur et détacheur placé à la base du mandrin et d'un conduit de mise en communication avec l'air libre du fond dudit mandrin.

Sur les dessins annexés, donnés à titre d'exemple non limitatif, d'une des formes de réalisation de l'objet de l'invention :

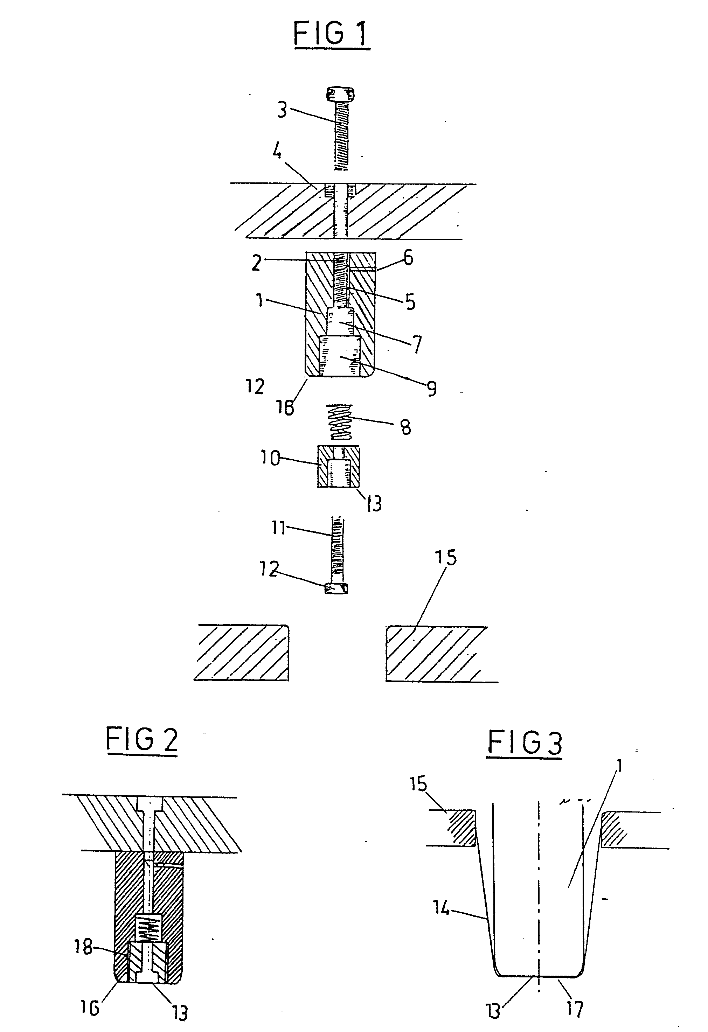

Les figures 1 et 2 représentent à des échelles différentes vu en élévation et en coupe le mandrin dans son ensemble ; la figure 3 montre un mode de formage.

Le mandrin figures 1, 2, est formé par une masse de formage 1 cylindrique dans l'exemple donné, il comporte un forage axial fileté 2, destiné à recevoir la vis 3 qui le fixe sur le porte matrice 4.

Le mandrin 1 est pourvu sur le secteur fileté d'une légère échancrure 5 rejoignant le conduit 6 de communication avec l'air libre. Un logement 7 reçoit le ressort 8, alors que la chambre de coulissement 9 constituant un cylindre guide, positionne le piston 10, recevant la vis obturante 11 à tête plate 12, qui assure la planéité de la surface de formage 13, jointant avec celle 16 du mandrin 1. Le tout, afin de réaliser une empreinte parfaitement lisse.

La surface pelliculaire ou le film 14 est placé sur son support 15 et immobilisée à chaud. Il suffit d'abaisser le mandrin 1 pour que la poussée par la surface 13, 16, forme un fond 17 parfaitement plan, mais l'air ayant été chassé, la matière synthétique 14 adhère.

Il suffit alors de remonter le mandrin pour que le piston 9 décolle par la surface 13, le fond 17. L'air pénètre par les espaces 18 non jointifs mais se frôlant et facilite ce décollement.

L'entrée d'air 6 et l'échancrure 5 assurent une circulation d'air suffisante pour éviter toutes perturbations ou plissages lors du retrait.

On supprime tout appareillage pneumatique ou autre. On fabrique en continu et avec une très grande régularité toutes les capacités et plus particulièrement les conditionnements cylindriques pelliculaires enveloppant les racines dans les pots de culture, comme tous autres étuis ou emballages en résines synthétiques, lamellaires ou pelliculaires tels, les enveloppes de glace, crème, confiserie, yaourt, etc...

On peut procéder au formage de films ou pellicules perforés qu'on était jamais arrivé à réaliser auparavant.

Toutefois les formes, dimensions et dispositions des différents éléments pourront varier dans la limite des équivalents comme d'ailleurs les matières utilisées pour leur fabrication, sans changer pour cela la conception générale de l'invention qui vient d'être décrite.

## Revendications

1. Dispositif de mandrin de formage pour films en résines synthétiques pleins ou perforés, destiné à éviter le plissage des produits ainsi obtenus en supprimant lors du retrait du mandrin, l'adhérence au fond du mandrin des produits ainsi obtenus, se caractérisant par la combinaison d'un piston (10) espaceur et détacheur placé à la base du mandrin dans une cavité (7, 9), d'un ressort (8) placé dans ladite cavité et agissant sur ledit piston espaceur et détacheur placé à la base du mandrin (1) et d'un conduit (6) de mise en communication avec l'air libre du fond (16) dudit mandrin.

2. Dispositif suivant la revendication 1 se caractérisant par le fait que le mandrin (1) est formé par une masse cylindrique avec forage axial fileté (2) destiné à recevoir une vis (3) de fixation sur un porte matrice (4).

3. Dispositif suivant la revendication 2 se caractérisant par le fait que le mandrin (1) est pourvu sur son secteur fileté (2) d'une légère échancrure (5) rejoignant le conduit (6) communiquant avec l'air extérieur.

4. Dispositif suivant la revendication 1 se caractérisant par le fait que la cavité (7, 9) comporte un logement (7) recevant le ressort (8) et une chambre (9) formant cylindre guide du piston espaceur et écarteur recevant une vis (11).

5. Dispositif suivant la revendication 4 se caractérisant par le fait que la vis (11) comporte une tête plate (12) qui assure la planéité de la surface de poussée (13) alors que les parois du piston (10) frôlent les faces du mandrin formant le cylindre (9) avec espace (18) micrométrique.

## Claims

1. Mandrel forming device for plain or perforated synthetic resin films, for avoiding crinkling of the products thus obtained by suppressing, when the mandrel is removed, the adherence to the bottom of the mandrel of the products thus obtained, characterized by the combination of a spacing and detaching piston (10) placed at the base of the mandrel in a cavity (7, 9), a spring (8) placed in the cavity and acting on the spacing and detaching piston placed at the base of the mandrel (1) and a duct (6) for communicating the bottom (16) of said mandrel with the free air.

2. Device according to claim 1, characterized by the fact that the mandrel (1) is formed by a cylindrical mass with axial threaded bore (2) intended to receive a screw (3) for fixing to a die holder (4).

3. Device according to claim 2, characterized by the fact that the mandrel (1) is provided on its threaded sector (2) with a slight indentation (5) joining the duct (6) communicating with the outside air.

4. Device according to claim 1, characterized by the fact that the cavity (7, 9) comprises a housing (7) receiving the spring (8) and a chamber (9) forming a cylinder for guiding the spacing and separating piston receiving a screw (11).

5. Device according to claim 4, characterized by the fact that the screw (11) has a flat head (12) which ensures the inherent flatness of the thrust surface (13) when the walls of the piston (10) touch the faces of the mandrel forming this cylinder (9) with micrometric space (18).

## Patentansprüche

1. Formgebungsdorn-Vorrichtung für ungelochte bzw. gelochte Filme aus Kunstharz die dazu bestimmt ist, eine Faltenbildung bei den auf diese Weise erzielten Produkten zu vermeiden, und zwar durch Beseitigung der Haftung der auf diese Weise erzielten Produkte in Innern des Dornes während dessen Entfernung, gekennzeichnet durch die Kombination eines Abstands- und Lösekolbens (10), der an der Grundfläche des Dornes in eine Aushöhlung (7, 9) eingesetzt ist, einer in diese Aushöhlung eingesetzten Feder (8), die auf den an der Grundfläche des Dornes (1) angebrachten Abstands- und Lösekolben einwirkt, und einer Bohrung (6) zur Verbindung des untersten inneren Teiles (16) dieses Dornes mit der Aussenluft.

2. Vorrichtung gemäss dem Patentanspruch 1, dadurch gekennzeichnet, das der Dorn (1) aus einer zylindrischen Masse mit axialer Gewindebohrung (2), die zur Aufnahme einer Befestigungsschraube (3) auf einen Matrixträger (4) bestimmt ist, besteht.

3. Vorrichtung gemäss dem Patentanspruch 2, dadurch gekennzeichnet, dass der Dorn (1) am Gewindeteil (2) einen leichten bogenförmigen Ausschnitt (5), der mit der zur Aussenluft führenden Bohrung (6) verbunden ist, aufweist.

4. Vorrichtung gemäss dem Patentanspruch 1, dadurch gekennzeichnet, dass die Aushöhlung (7, 9) mit einer Aufnahme (7) für die Feder (8) und mit einer Kammer (9), die einen Fuhrungszylinder für den mit einer Schraube (11) versehenen Abstands- und Lösekolben bildet, versehen ist.

5. Vorrichtung gemäss dem Patentanspruch 4, dadurch gekennzeichnet, dass die Schraube (11) einen flachen Kopf (12), der die Planebenheit der Schubfläche (13) gewährleistet während die Wände des Kolbens (10) die Seiten des Dornes, die den Zylinder (9) bilden, mit einem mikrometrischen Abstand (18) berühren, aufweist.

# FIG 1

# FIG 2

# FIG 3